# EUROPEAN PATENT APPLICATION

(11) **EP 4 734 614 A1**
(43) Date of publication of application: **29.04.2026**
(21) Application number: 24825675.2
(22) Date of filing: 29.05.2024
(51) Int. Cl.: H04W 48/18, H04W 4/38, H04W 48/16, H04W 88/06

(54) **WIRELESS MACHINE AND METHOD FOR OPERATING SAME**

(30) Priority: 20.06.2023 JP 2023100916
(71) Applicant: Panasonic Intellectual Property Management Co., Ltd., Kadoma-shi, Osaka 571-0057 (JP)
(72) Inventor: KAMIMURA, Takanori, kadoma-shi, Osaka 571-0057 (JP); TANIZAWA, Toshiki, kadoma-shi, Osaka 571-0057 (JP); ANAN, Yuki, kadoma-shi, Osaka 571-0057 (JP)
(74) Representative: SSM Sandmair
(86) International application number: PCT/JP2024/019706
(87) International publication number: WO 2024/262268

(57) **Abstract**

Provided is a wireless communicator that can transmit information related to a meter to a center device under communication conditions with reduced cost and good communication quality. A controller of a wireless communicator (20) executes a communication carrier selection operation including: an acquisition operation of acquiring communication quality information of a communication network of a communication carrier included in a candidate set of communication carriers that provide communication networks to which the wireless communicator is connectable via the communication interface, wherein the communication carrier subjected to the acquisition operation is selected in accordance with preference ranks assigned to the communication carriers; a determination operation of determining whether the communication quality information satisfies a predetermined quality requirement; and a choice operation of choosing a connection destination communication carrier the communication network of which is used for transmission of the information related to the meter, wherein a communication carrier that provides a communication network the communication quality information of which satisfies the predetermined quality requirement is chosen as the connection destination communication carrier. Upon choosing the connection destination communication carrier in the choice operation, the controller terminates the communication carrier selection operation without executing the acquisition operation for any other communication carrier having a lower preference rank than the chosen connection destination communication carrier.

## Description

### Technical Field

The present disclosure relates to a wireless communicator that transmits information to a center device and a method of operating the wireless communicator.

### Background Art

One known example of conventional wireless communicators is a communication terminal of a meter notification system disclosed in Patent Literature 1. In this meter notification system, the communication terminal acquires meter measurement information indicating a gas fee from a gas meter and transmits the meter measurement information to a server using a wide-area IP network.

### Citation List

### Patent Literature

PTL 1: Japanese Laid-Open Patent Application Publication No. 2006-340154

### Summary of Invention

### Technical Problem

For example, the meter notification system of Patent Literature 1 uses a predetermined wide-area IP network for communication between the communication terminal and the server. Depending on their type, communication networks such as this wide area IP network differ in communication conditions such as usage fees and communication quality. For example, if the communication network used imposes a high usage fee, the operation cost of the meter notification system increases. If the communication quality of the communication network is poor, the communication terminal might fail to transmit the meter measurement information to the server.

The present disclosure has been made to solve the problem as described above, and an object of the present disclosure is to provide a wireless communicator that can transmit information related to the meter to a center device under favorable communication conditions, and a method of operating the wireless communicator.

### Solution to Problem

A wireless communicator according to an aspect of the present disclosure is a wireless communicator that transmits information to a center device using a communication network of a communication carrier, the information being related to a meter that measures consumption of electricity, gas, or water, the wireless communicator including: a controller; and a communication interface, wherein the controller executes a communication carrier selection operation including: an acquisition operation of acquiring communication quality information of a communication network of a communication carrier included in a candidate set of communication carriers that provide communication networks to which the wireless communicator is connectable via the communication interface, wherein the communication carrier subjected to the acquisition operation is selected in accordance with preference ranks assigned to the communication carriers; a determination operation of determining whether the communication quality information satisfies a predetermined quality requirement; and a choice operation of choosing a connection destination communication carrier the communication network of which is used for transmission of the information related to the meter, wherein a communication carrier that provides a communication network the communication quality information of which satisfies the predetermined quality requirement is chosen as the connection destination communication carrier, and upon choosing the connection destination communication carrier in the choice operation, the controller terminates the communication carrier selection operation without executing the acquisition operation for any other communication carrier having a lower preference rank than the chosen connection destination communication carrier.

A wireless communicator operation method according to an aspect of the present disclosure is a method of operating a wireless communicator that transmits information to a center device using a communication network of a communication carrier, the information being related to a meter that measures consumption of electricity, gas, or water, the method including: causing the wireless communicator to execute a communication carrier selection operation including an acquisition operation of acquiring communication quality information of a communication network of a communication carrier included in a candidate set of communication carriers that provide communication networks to which the wireless communicator is connectable via the communication interface, wherein the communication carrier subjected to the acquisition operation is selected in accordance with preference ranks assigned to the communication carriers, a determination operation of determining whether the communication quality information satisfies a predetermined quality requirement, and a choice operation of choosing a connection destination communication carrier the communication network of which is used for transmission of the information related to the meter, wherein a communication carrier that provides a communication network the communication quality information of which satisfies the predetermined quality requirement is chosen as the connection destination communication carrier; and upon choosing the connection destination communication carrier in the choice operation, causing the wireless communicator to terminate the communication carrier selection operation without executing the acquisition operation for any other communication carrier having a lower preference rank than the chosen connection destination communication carrier.

### Advantageous Effects of Invention

According to the present disclosure, the connection destination communication carrier is chosen based on the preference ranks and the communication quality information. Accordingly, a communication carrier that provides a communication network the communication quality information of which satisfies the predetermined quality requirement and that has a higher preference rank than the other candidate communication carriers is chosen as the connection destination communication carrier. By using such a connection destination communication carrier, the information related to the meter can be transmitted to the center device under favorable communication conditions.

The above and further objects, features and advantages of the present disclosure will be more apparent from the following detailed description of preferred embodiments with reference to the accompanying drawings.

### Brief Description of Drawings

FIG. 1 schematically shows a wireless communication system including a wireless communicator according to an embodiment or a variant of the present disclosure.
FIG. 2 shows a candidate set of parameters.
FIG. 3 is a list showing the levels of RSRP, SINR, and RSRQ acquired as communication quality information.
FIG. 4 is a flowchart showing an example of a communication carrier selection operation.
FIG. 5 is a flowchart showing an example of a setting operation of setting the execution intervals at which the communication carrier selection operation is executed.
FIG. 6 is a flowchart showing an example of an execution determination operation of determining whether to execute the communication carrier selection operation.

### Description of Embodiments

### <Wireless Communication System>

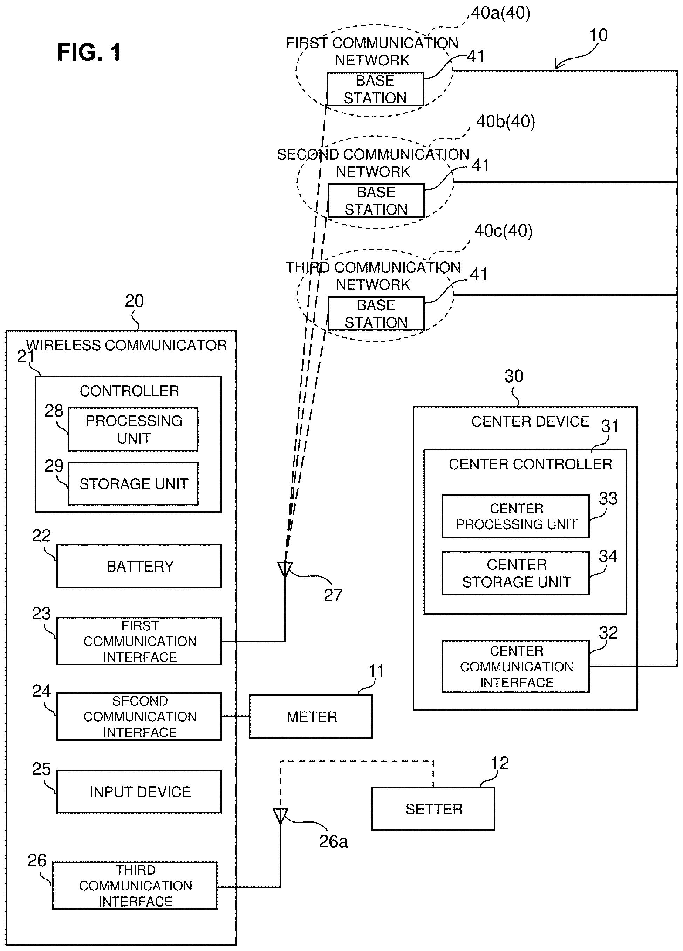

A wireless communication system 10 includes a wireless communicator 20 according to one embodiment of the present disclosure. As shown in FIG. 1, the wireless communication system 10 collects information from the wireless communicator 20 into a center device 30. This information includes information related to a meter 11. The information related to the meter 11 includes, for example, a value of gas consumption measured by the meter 11 and an alarm indicating an abnormality in the gas flow rate measured by the meter 11. The meter 11 measures the consumption of gas such as city gas or LP gas by a gas consumer. In the following description, the subject monitored by the meter 11 is gas. However, the subject to be monitored is not limited to gas, and may be electricity or water. The gas to be monitored is not limited to city gas or LP gas, and may be hydrogen gas.

The wireless communicator 20 is communicatively connected to the meter 11 of the consumer, and exchanges information with the meter 11. For example, the wireless communicator 20 transmits a request for meter measurement value to the meter 11, and receives a meter measurement value corresponding to the request from the meter 11. The meter 11 transmits a meter measurement value to the wireless communicator 20 at a predetermined time, and the wireless communicator 20 transmits a confirmation of receipt to the meter 11. In addition, the wireless communicator 20 exchanges information such as the information related to the meter 11 with the center device 30 using a communication network 40 such as a wide area network (WAN). For example, the wireless communicator 20 transmits the information related to the meter 11, such as a meter measurement value received from the meter 11, to the center device 30, and receives a confirmation of receipt of the information from the center device 30. The center device 30 is a server that collects information from the wireless communicator 20. The center device 30 manages the information collected from the wireless communicator 20 and provides services and information based on the collected information to the gas consumer or to the gas provider that manages the meter 11.

Furthermore, the wireless communicator 20 is, for example, connectable to communication networks 40 of a plurality of communication carriers under a contract with a mobile virtual network operator (MVNO). The wireless communicator 20 executes a communication carrier selection operation of selecting a connection destination communication carrier from a candidate set of communication carriers. The connection destination communication carrier is a communication carrier to the communication network 40 of which the wireless communicator 20 connects to perform an information transmission operation of transmitting the information related to the meter 11 to the center device 30. Each communication network 40 includes communication facilities such as a base station 41, an exchange station, and cables that are owned or rented by the communication carrier, and is connected to the Internet. The details of the communication carrier selection operation will be described later. The communication network 40 of the connection destination communication carrier is used not only to transmit the information related to the meter 11 but also to transmit other information to the center device 30 and receive information from the center device 30.

### <Center Device>

The center device 30 includes a center controller 31 and a center communication interface 32 electrically connected to the center controller 31. The center communication interface 32 is a communication interface for wired communication, and is connected to the communication networks 40 via cables or any other means. Thus, the center communication interface 32 receives information transmitted from the wireless communicator 20 via any of the communication networks 40 and inputs the received information to the center controller 31. In addition, the center communication interface 32 transmits information to the wireless communicator 20 via any of the communication networks 40 under the control of the center controller 31. The center communication interface 32 may be a communication interface for wireless communication, and may be wirelessly connected to the communication networks 40. The center device 30 may be connected to the Internet wirelessly or by wire, and may communicate with the wireless communicator 20 via the Internet and the communication networks 40.

The center controller 31 is a computer, and includes a center processing unit 33 and a center storage unit 34. The center storage unit 34 is a memory accessible by the center processing unit 33, and includes a RAM and a ROM. The center storage unit 34 stores programs for the center device 30 to execute various processes such as information collection and information management, and further stores information used in these programs. In addition, the center storage unit 34 stores other information, such as the information related to the meter 11, which has been collected from the wireless communicator 20.

The center processing unit 33 includes, for example, a processor such as a CPU, and executes the programs stored in the center storage unit 34. Thus, the center controller 31 controls the operations of components of the center device 30, and executes various processes related to information collection and information management. The center controller 31 may consist of a single device or may be constituted by a plurality of distributed devices that cooperate to perform the functionality of the center controller 31.

### <Wireless Communicator>

The wireless communicator 20 includes: a controller 21; a battery 22; and a first communication interface 23, a second communication interface 24, an input device 25, and a third communication interface 26 that are electrically connected to the controller 21. The controller 21 is a computer, and includes a processing unit 28 and a storage unit 29.

The storage unit 29 is a memory accessible by the processing unit 28, and includes a RAM and a ROM. The storage unit 29 stores programs for the wireless communicator 20 to execute various processes such as the information transmission operation and the communication carrier selection operation, and further stores information used in these programs. In addition, the storage unit 29 stores the information related to the meter 11 such as meter measurement values received from the meter 11.

The processing unit 28 includes, for example, a processor such as a CPU or an MPU, and executes the programs stored in the storage unit 29. Based on input information from the first communication interface 23, the second communication interface 24, the input device 25, and the third communication interface 26, the controller 21 controls the operations of components of the wireless communicator 20, and executes various processes such as the information transmission operation and the communication carrier selection operation. The controller 21 may consist of a single device or may be constituted by a plurality of distributed devices that cooperate to perform the functionality of the controller 21.

The first communication interface 23 is a communication interface for wireless communication, and is electrically connected to an antenna 27. Thus, the first communication interface 23 is wirelessly connectable to the base stations 41 of the communication networks 40 via the antenna 27. The first communication interface 23 receives information transmitted from the center device 30 via any of the communication networks 40 and the antenna 27, and inputs the received information to the controller 21. In addition, under the control of the controller 21, the first communication interface 23 transmits information to the center device 30 via the antenna 27 and any of the communication networks 40.

The second communication interface 24 is a communication interface for wired communication, and is connected to the meter 11 via a cable. Thus, the second communication interface 24 receives information from the meter 11 and inputs the received information to the controller 21. In addition, under the control of the controller 21, the second communication interface 24 transmits information to the meter 11. Alternatively, the wireless communicator 20 may be wirelessly connected to the meter 11 via a wireless communication interface such as the first communication interface 23 or the third communication interface 26.

The third communication interface 26 is a communication interface for wireless communication and is electrically connected to an antenna 26a. Thus, the third communication interface 26 is wirelessly connected via the antenna 26a to a setter 12, which is a mobile wireless terminal of a user. The third communication interface 26 receives information transmitted from the setter 12 via the antenna 26a and inputs the received information to the controller 21. In addition, under the control of the controller 21, the third communication interface 26 transmits information to the setter 12 via the antenna 26a.

The input device 25 includes, for example, a reed switch, a button key, or a touch panel. The input device 25 is operated by a user and inputs information corresponding to the user's operation to the controller 21. The battery 22 is a power source that supplies electrical power to components such as the controller 21 of the wireless communicator 20, and is connected to the components. When the reed switch of the input device 25 is turned on or off, the reed switch inputs a corresponding signal to the controller 21. Once the reed switch is turned on, the battery 22 supplies electrical power to the components of the wireless communicator 20, thereby allowing the powered components to operate. Once the reed switch is turned off, the battery 22 stops supplying electrical power to the components of the wireless communicator 20, and the components cease to operate. The wireless communicator 20 may receive electrical power supplied from an external power source such as a commercial power supply.

### <Parameters>

In the wireless communication system 10, the wireless communicator 20 is contractually connectable to communication networks 40 of a plurality of communication carriers. In the example of FIG. 1, the following communication networks are preset as the communication networks 40 connectable to the wireless communicator 20: a first communication network 40a, which is a communication network 40 of a first communication carrier; a second communication network 40b, which is a communication network 40 of a second communication carrier; and a third communication network 40c, which is a communication network 40 of a third communication carrier. In this case, in the communication carrier selection operation, the wireless communicator 20 selects a connection destination communication carrier from a candidate set consisting of the first to third communication carriers based on parameters.

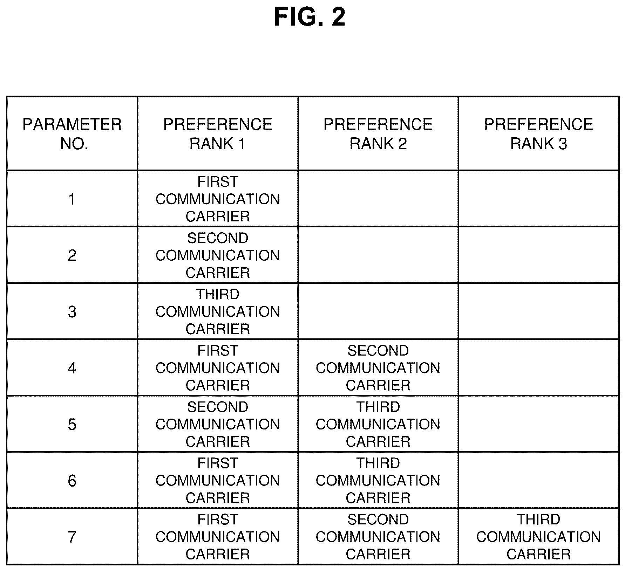

As shown in FIG. 2, each of these parameters is stored in the storage unit 29 in association with a candidate set of one or more communication carriers that provide connectable communication networks 40 and with preference ranks indicating how much the communication network 40 of each communication carrier is preferred for connection compared to those of the other communication carries. The preference ranks are set according to communication information of the communication carriers. Examples of the communication information include the usage fees and communication status of the communication networks 40 of the communication carriers. When the communication information includes a plurality of factors (e.g., the usage fees and communication status of the communication networks 40), the preference ranks are assigned taking into account the plurality of factors as a whole.

For example, the lower the usage fee of a communication network 40 or the better the communication status of a communication network 40, the more favorable the communication information of the communication carrier that provides the communication network 40 and the higher the preference rank of the communication carrier. For example, the communication status of each communication network 40 may include communication quality information such as RSRP, SINR, and RSRQ. In this case, the higher the values of RSRP, SINR, and RSRQ of a communication network 40 and the better the communication quality of the communication network 40, the more favorable the communication information of the communication carrier that provides the communication network 40 and the higher the preference rank of the communication carrier. The communication status may include communication failure information indicating that information from the wireless communicator 20 fails to reach the center device 30 or that the communication speed is slow. In this case, the lower the frequency of communication failures in a communication network 40, the more favorable the communication information of the communication carrier that provides the communication network 40 and the higher the preference rank of the communication carrier.

For example, in Parameter No. 7 of FIG. 2, the communication information of the first communication carrier is more favorable than that of the second communication carrier, and the preference rank of the first communication carrier is higher than that of the second communication carrier. The communication information of the second communication carrier is more favorable than that of the third communication carrier, and the preference rank of the second communication carrier is higher than that of the third communication carrier.

A parameter used in the communication carrier selection operation is selected from a candidate set of parameters by a user such as a consumer, a manager of the wireless communicator 20, or a manager of the meter 11. The selected parameter is input to the controller 21, for example, through the input device 25, the first communication interface 23, the third communication interface 26, or the storage unit 29. Specifically, the user may operate the input device 25 to select a desired parameter from the candidate set of parameters and input an instruction corresponding to that selection to the controller 21. Alternatively, when the setter 12 of the user can wirelessly communicate with the wireless communicator 20, the user may operate the setter 12 to select a desired parameter from the candidate set of parameters and input an instruction corresponding to that selection to the controller 21 via the third communication interface 26. The selection instruction input by the user is stored into the storage unit 29 by the controller 21. Thus, in the communication carrier selection operation, the instruction to select a parameter is input to the controller 21 through the input device 25, the first communication interface 23, the third communication interface 26, or the storage unit 29.

In the example of FIG. 2, seven parameters designated as Parameters Nos. 1 to 7 are defined as the candidate set of parameters. In Parameters Nos. 1 to 3, one communication carrier is set as a communication carrier of Preference Rank 1. Accordingly, the user can select any of Parameters Nos. 1 to 3 to limit the subject of the communication carrier selection operation to the communication carrier of Preference Rank 1. In Parameters Nos. 4 to 7, preference ranks are assigned to two or three communication carriers. Thus, by selecting any of Parameters Nos. 4 to 7, the user can subject the communication carriers included in the selected parameter to the communication carrier selection operation in accordance with the preference ranks assigned to the communication carriers. In this manner, the user can subject any suitable communication carrier to the communication carrier selection operation in line with the user's intention.

### <Communication Quality Information>

In the communication carrier selection operation, a connection destination communication carrier is selected based on communication quality information of communication networks 40 of communication carriers. Examples of the communication quality information include values of at least one of RSRP, SINR, or RSRQ, and the values are measured by the wireless communicator 20. The higher the values measured for a communication network 40, the better the communication quality of the communication network 40. The communication quality information may be acquired taking into account RSRP, SINR, and RSRQ individually or as a whole.

"RSRP" is an abbreviation for Reference Signal Received Power, and refers to the electrical power per reference signal received by the wireless communicator 20 from the base station 41 of the communication network 40. "SINR" is an abbreviation for Signal-to-Interference-plus-Noise Ratio, and refers to the ratio of the electrical power of a desired signal among signals received by the wireless communicator 20 from the base station 41 of the communication network 40 to the electrical power of the other signals. "RSRQ" is an abbreviation for Reference Signal Received Quality, and refers to the quality of a reference signal received by the wireless communicator 20 from the base station 41 of the communication network 40.

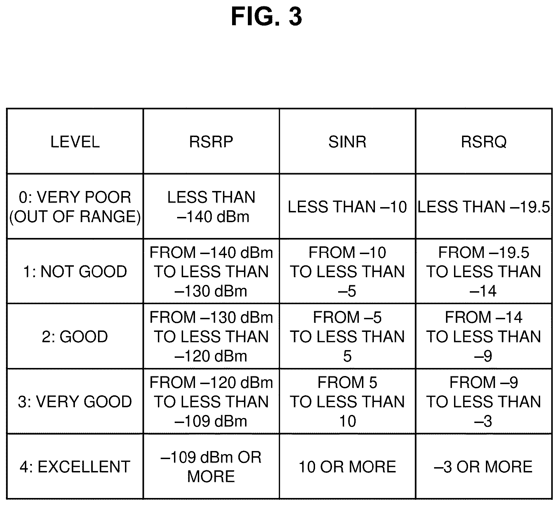

For example, as shown in FIG. 3, levels are assigned to the communication quality information of the communication networks 40. For example, when the value of RSRP is less than -140 dBm, the communication quality is very poor and below a predetermined required level of quality, and the communication network 40 is out of range. In this case, the communication quality is rated as Level 0. When the value of RSRP is from -140 dBm to less than -130 dBm, the communication quality is not good and rated as Level 1. When the value of RSRP is from -130 dBm to less than -120 dBm, the communication quality is good and rated as Level 2. When the value of RSRP is from -120 dBm to less than -109 dBm, the communication quality is very good and rated as Level 3. When the value of RSRP is -109 dBm or more, the communication quality is excellent and rated as Level 4. For example, as shown in FIG. 3, levels are also assigned for SINR and RSRQ in the same manner as for RSRP.

When the communication quality of a communication network 40 is very poor and at Level 0 or not good and at Level 1, the wireless communicator 20 cannot exchange, or cannot stably exchange, information with the center device 30 via that communication network 40. Thus, for example, thresholds set for the communication quality information of the communication networks 40 of the communication carriers and used in the communication carrier selection operation to select a connection destination communication carrier may be values corresponding to the boundary between Level 1 and Level 2. In the example of FIG. 3, the threshold of RSRP is -130 dBm, the threshold of SINR is -5, and the threshold of RSRQ is -14. The level of the communication quality information may be defined taking into account the levels of RSRP, SINR, and RSRQ individually or as a whole.

When the value of the communication quality information of a communication network 40 is lower than the threshold, the communication quality information does not satisfy the predetermined quality requirement. When the value of the communication quality information of a communication network 40 is equal to or higher than the threshold, the communication quality information satisfies the predetermined quality requirement. The communication carrier that provides the communication network 40 is then chosen as the connection destination communication carrier, and this choice is stored in the storage unit 29. For example, when the communication quality information of the communication networks 40 includes RSRP, SINR, and RSRQ, the wireless communicator 20 determines that the communication quality information does not satisfy the predetermined quality requirement if any one of RSRP, SINR, and RSRQ is lower than the threshold. When all of RSRP, SINR, and RSRQ are equal to or higher than the thresholds, the wireless communicator 20 determines that the communication quality information satisfies the predetermined quality requirement. By thus choosing the connection destination communication carrier based on the communication quality information of the communication networks 40, the wireless communicator 20 can execute the operation of transmitting information to the center device 30 under stable communication conditions.

### <Communication Carrier Selection Operation>

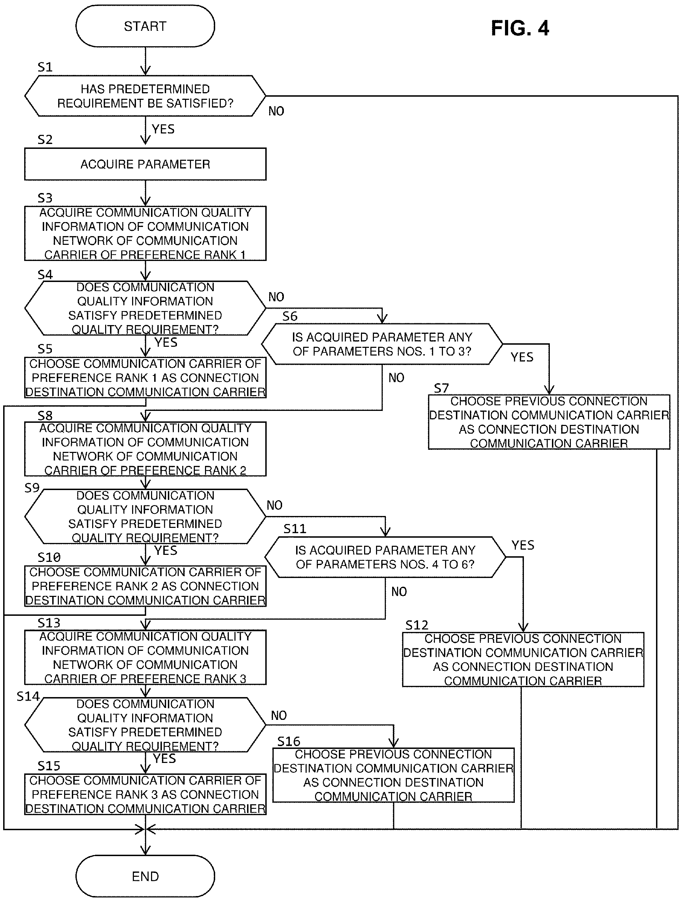

The communication carrier selection operation is executed by the controller 21, for example, in accordance with the flowchart shown in FIG. 4. The following describes an example in which the communication quality information of the communication networks 40 is evaluated by taking RSRP, SINR, and RSRQ into account as a whole. Alternatively, the communication quality information may be evaluated based on any one or two of RSRP, SINR, and RSRQ.

First, the controller 21 determines whether a predetermined requirement has been satisfied (step S1). For example, once the reed switch of the input device 25 is turned on, the controller 21 determines that an activation operation has been performed and that the predetermined requirement has been satisfied (step S1: YES). The controller 21 then executes a selection operation of selecting a parameter to be used in the subsequent acquisition operation from a candidate set of parameters (step S2). When the parameter to be used in the acquisition operation is prestored in the storage unit 29, the controller 21 acquires (selects) the stored parameter from the storage unit 29 in the selection operation. For example, when the parameter to be used in the acquisition operation is not prestored in the storage unit 29, or when the user wants to select a parameter other than the parameter prestored in the storage unit 29, the controller 21 acquires the user's instruction for parameter selection through the input device 25, the first communication interface 23, or the third communication interface 26. The controller 21 then acquires (selects) the parameter corresponding to the selection instruction from the candidate set of parameters.

Subsequently, the controller 21 executes an acquisition operation of acquiring communication quality information of a communication network 40 of a communication carrier included in a candidate set of communication carriers that provide communication networks 40 to which the wireless communicator is connectable via the first communication interface 23 (step S3). The communication carrier subjected to the acquisition operation is selected in accordance with preference ranks assigned to the communication carriers. In this acquisition operation, the controller 21 connects to the communication network 40 of the communication carrier of the highest rank (Preference Rank 1) in the acquired parameter, measures the values of RSRP, SINR, and RSRQ based on signals received from the communication network 40, and acquires the measured values as the communication quality information of the communication network 40 of the communication carrier of Preference Rank 1.

Subsequently, the controller 21 executes a determination operation of determining whether the communication quality information of the communication network 40 of the communication carrier of Preference Rank 1 satisfies a predetermined quality requirement (step S4). In this determination operation, the controller 21 determines whether the measured value of RSRP is equal to or higher than a threshold, whether the measured value of SINR is equal to or higher than a threshold, and whether the measured value of RSRQ is equal to or higher than a threshold. Upon determining that all of the measured values of RSRP, SINR, and RSRQ of the communication network 40 of the communication carrier of Preference Rank 1 are equal to or higher than the thresholds, the controller 21 determines that the communication quality information of the communication network 40 satisfies the predetermined quality requirement (step S4: YES).

Subsequently, the controller 21 executes a choice operation of choosing a connection destination communication carrier the communication network 40 of which is used for transmission of the information related to the meter 11 (step S5). A communication carrier that provides a communication network 40 the communication quality information of which satisfies the predetermined quality requirement is chosen as the connection destination communication carrier. In this choice operation, when the communication quality information acquired based on signals received from the communication network 40 of the communication carrier of Preference Rank 1 satisfies the predetermined quality requirement, the controller 21 chooses the communication carrier of Preference Rank 1 as the connection destination communication carrier, and stores this choice in the storage unit 29. In this case, the wireless communicator 20 terminates the communication carrier selection operation without executing the acquisition operation for any other communication carrier of a lower preference rank, and executes the information transmission operation via the communication network 40 of the communication carrier of Preference Rank 1 that has been chosen as the connection destination communication carrier.

In step S4, when, for example, at least one of the measured values of RSRP, SINR, and RSRQ is lower than a threshold, the controller 21 determines that the communication quality information does not satisfy the predetermined quality requirement (step S4: NO). The controller 21 then determines whether the acquired parameter is any of Parameters Nos. 1 to 3 (step S6). In Parameters Nos. 1 to 3, only the communication carrier of Preference Rank 1 is set, and there are no other communication carriers of lower preference ranks. Accordingly, if the communication quality information of the communication network 40 of the communication carrier of Preference Rank 1 does not satisfy the predetermined quality requirement, this means that the communication quality information of the communication network 40 of every communication carrier included in the candidate set of communication carriers in the acquired parameter does not satisfy the predetermined quality requirement.

Accordingly, when the acquired parameter is any of Parameters Nos. 1 to 3 (step S6: YES), the controller 21 chooses a previous connection destination communication carrier as the connection destination communication carrier in the choice operation (step S7). The previous connection destination communication carrier is the communication carrier that provides the communication network 40 that was connected to the wireless communicator 20 immediately before execution of the current communication carrier selection operation, and this previous choice has been stored in the storage unit 29. The controller 21 refers to the storage unit 29 to identify the previous connection destination communication carrier, and updates this communication carrier in the storage unit 29 as the connection destination communication carrier chosen in the current communication carrier selection operation. The controller 21 then terminates the communication carrier selection operation without executing the acquisition operation for any other communication carrier of a lower preference rank.

When the connection destination communication carrier is different from the communication carrier of Preference Rank 1, the wireless communicator 20 breaks the connection to the communication network 40 of the communication carrier of Preference Rank 1, and then connects to the communication network 40 of the connection destination communication carrier. When the connection destination communication carrier is the same as the communication carrier of Preference Rank 1, the wireless communicator 20 does not break the connection to the communication network 40 of the communication carrier of Preference Rank 1, but maintains this connection as the connection to the communication network 40 of the connection destination communication carrier. The communication network 40 of the connection destination communication carrier was connected to the wireless communicator 20 until execution of the current communication carrier selection operation. Accordingly, even after execution of the current communication carrier selection operation, the wireless communicator 20 can connect to the communication network 40 of the connection destination communication carrier and avoid a situation in which the wireless communicator 20 cannot carry out the information transmission operation.

When it is determined in step S6 that the acquired parameter is not any of Parameters Nos. 1 to 3 (step S6: NO), the acquired parameter is any of Parameters Nos. 4 to 7. In these parameters Nos. 4 to 7, communication carriers of Preference Rank 2 and lower preference ranks are set. In accordance with the preference ranks in the acquired parameter, the controller 21 executes an acquisition operation of acquiring the communication quality information of the communication network 40 of the communication carrier of Preference Rank 2 next to Preference Rank 1 (step S8). In this acquisition operation, the controller 21 breaks the connection to the communication network 40 of the communication carrier of Preference Rank 1, and then connects to the communication network 40 of the communication carrier of Preference Rank 2. The controller 21 measures the values of RSRP, SINR, and RSRQ based on signals received from this communication network 40, and acquires the measured values as the communication quality information.

Subsequently, the controller 21 executes a determination operation of determining whether the communication quality information of the communication network 40 of the communication carrier of Preference Rank 2 satisfies the predetermined quality requirement (step S9). Upon determining in this determination operation that the communication quality information satisfies the predetermined quality requirement (step S9: YES), the controller 21 then executes a choice operation to choose the communication carrier of Preference Rank 2 as the connection destination communication carrier, and stores this choice in the storage unit 29 (step S10). The wireless communicator 20 then terminates the communication carrier selection operation without executing the acquisition operation for any other communication carrier of a lower preference rank, and executes the information transmission operation via the communication network 40 of the communication carrier of Preference Rank 2 that has been chosen as the connection destination communication carrier.

Upon determining in step S9 that the communication quality information of the communication network 40 of the communication carrier of Preference Rank 2 does not satisfy the predetermined quality requirement (step S9: NO), the controller 21 determines whether the acquired parameter is any of Parameters Nos. 4 to 6 (step S11). In these parameters Nos. 4 to 6, only the communication carriers of Preference Ranks 1 and 2 are set, and there are no other communication carriers of lower preference ranks. Accordingly, if the communication quality information of the communication networks 40 of the communication carriers of Preference Ranks 1 and 2 does not satisfy the predetermined quality requirement, this means that the communication quality information of the communication network 40 of every communication carrier included in the candidate set of communication carriers in the acquired parameter does not satisfy the predetermined quality requirement.

Thus, upon determining that the acquired parameter is any of Parameters Nos. 4 to 6 (step S11: YES), the controller 21 executes a choice operation to choose the previous connection destination communication carrier as the connection destination communication carrier in the current communication carrier selection operation, and stores this choice in the storage unit 29 (step S12). The controller 21 then terminates the communication carrier selection operation without executing the acquisition operation for any other communication carrier of a lower preference rank.

When the connection destination communication carrier is different from the communication carrier of Preference Rank 2, the controller 21 breaks the connection to the communication network 40 of the communication carrier of Preference Rank 2, and then connects to the communication network 40 of the connection destination communication carrier. When the connection destination communication carrier is the same as the communication carrier of Preference Rank 2, the wireless communicator 20 does not break the connection to the communication network 40 of the communication carrier of Preference Rank 2, but maintains this connection as the connection to the communication network 40 of the connection destination communication carrier. The communication network 40 of the connection destination communication carrier was connected to the wireless communicator 20 until execution of the current communication carrier selection operation. Accordingly, even after execution of the current communication carrier selection operation, the wireless communicator 20 can connect to the communication network 40 of the connection destination communication carrier and avoid a situation in which the wireless communicator 20 cannot carry out the information transmission operation.

When it is determined in step S11 that the acquired parameter is not any of Parameters Nos. 4 to 6 (step S11: NO), the acquired parameter is Parameter No. 7. In Parameter No. 7, a communication carrier of Preference Rank 3 is set. Thus, in accordance with the preference ranks in Parameter No. 7, the controller 21 executes an acquisition operation of acquiring the communication quality information of the communication network 40 of the communication carrier of Preference Rank 3 next to Preference Rank 2 (step S13). In this acquisition operation, the controller 21 breaks the connection to the communication network 40 of the communication carrier of Preference Rank 2, and then connects to the communication network 40 of the communication carrier of Preference Rank 3. The controller 21 measures the values of RSRP, SINR, and RSRQ based on signals received from this communication network 40, and acquires the measured values as the communication quality information of the communication network 40 of the communication carrier of Preference Rank 3.

Subsequently, the controller 21 executes a determination operation of determining whether the communication quality information of the communication network 40 of the communication carrier of Preference Rank 3 satisfies the predetermined quality requirement (step S14). Upon determining in this determination operation that the communication quality information satisfies the predetermined quality requirement (step S14: YES), the controller 21 executes a choice operation to choose the communication carrier of Preference Rank 3 as the connection destination communication carrier, and stores this choice in the storage unit 29 (step S15). Accordingly, the wireless communicator 20 executes the information transmission operation via the communication network 40 of the communication carrier of Preference Rank 3 that has been chosen as the connection destination communication carrier.

If the controller 21 determines in step S14 that the communication quality information of the communication network 40 of the communication carrier of Preference Rank 3 does not satisfy the predetermined quality requirement (step S14: NO), this means that the communication quality information of the communication network 40 of every communication carriers included in the candidate set of communication carriers in the parameter does not satisfy the predetermined quality requirement. In this case, the controller 21 executes a choice operation to choose the previous connection destination communication carrier as the connection destination communication carrier, and stores this choice in the storage unit 29 (step S16).

When the connection destination communication carrier is different from the communication carrier of Preference Rank 3, the wireless communicator 20 breaks the connection to the communication network 40 of the communication carrier of Preference Rank 3, and then connects to the communication network 40 of the connection destination communication carrier. When the connection destination communication carrier is the same as the communication carrier of Preference Rank 3, the wireless communicator 20 does not break the connection to the communication network 40 of the communication carrier of Preference Rank 2, but maintains this connection as the connection to the communication network 40 of the connection destination communication carrier. The wireless communicator 20 executes the information transmission operation via the connection destination communication carrier.

In this case, the previous connection destination communication carrier is any of the communication carriers of Preference Ranks 1 to 3, and the communication quality information of its communication network 40 is, for example, at Level 0 or 1 and fails to satisfy the predetermined quality requirement. However, the previous connection destination communication carrier was connected to the wireless communicator 20 until the current communication carrier selection operation. Accordingly, the wireless communicator 20 can connect to the communication network 40 of the previous connection destination communication carrier and avoid a situation in which the wireless communicator 20 cannot carry out the information transmission operation, even though the communication quality of the communication network 40 is not good.

As described above, in the communication carrier selection operation, the acquisition operation is executed in accordance with the preference ranks of the communication carriers, the determination operation is executed based on the communication quality information acquired in the acquisition operation, and the connection destination communication carrier is chosen based on the determination result of the determination operation. In this selectin operation, when the communication quality information of the communication network 40 of the communication carrier of Preference Rank 1 does not satisfy the predetermined quality requirement, the acquisition operation is executed for the communication carrier of Preference Rank 2. Based on the communication quality information acquired in this acquisition operation, the determination operation and the choice operation are executed. The acquisition operation and the subsequent operations are repeated in descending order of preference rank until it is determined that the communication quality information of a communication network 40 satisfies the predetermined quality requirement. When the communication quality information of a communication network 40 satisfies the predetermined quality requirement, the communication carrier that provides this communication network 40 is chosen as the connection destination communication carrier, and the acquisition operation and the subsequent operations are not executed for any other communication carrier of a lower preference rank.

Accordingly, when the communication quality information of the communication network 40 of a communication carrier having a preference rank higher than the lowest preference rank in the parameter satisfies the predetermined quality requirement, it is unnecessary to acquire the communication quality information of the communication network 40 of any other communication carrier of a lower preference rank. For example, in Parameter No. 7, communication carriers of Preference Ranks 1 to 3 are set. If the communication quality information of the communication network 40 of the communication carrier of Preference Rank 1 satisfies the predetermined quality information, the first communication carrier, which is the communication carrier of Preference Rank 1, is chosen as the connection destination communication carrier without acquiring the communication quality information of the communication networks 40 of the communication carriers of Preference Ranks 2 and 3. In this case, since there is no need to acquire the communication quality information of the communication networks 40 of all communication carriers included in the parameter, the connection destination communication carrier can be chosen quickly. This quick choice of the communication carrier leads to a reduction in the operation time of the wireless communicator 20, and allows a communication carrier that provides a communication network 40 with good communication quality to be selected as the connection destination communication carrier.

The preference ranks are set in descending order of favorability of communication information such as usage fees and communication status of the communication networks 40 of the communication carriers. The communication quality information of the communication networks 40 of the communication carriers is acquired in descending order of preference rank, and a communication carrier that provides a communication network 40 the communication quality information of which satisfies the predetermined quality requirement is chosen as the connection destination communication carrier. Accordingly, a communication carrier that provides a communication network 40 the communication quality information of which satisfies the predetermined quality requirement and that has a higher preference rank than the other candidate communication carriers is chosen as the connection destination communication carrier. By using such a connection destination communication carrier, information can be exchanged with the center device 30 under favorable communication conditions (favorable communication information and good communication quality).

Furthermore, each parameter includes one communication carrier or a plurality of communication carriers. By selecting a parameter including one communication carrier, the user can limit the subject of the the acquisition operation to this communication carrier.

In addition, when the communication quality information of the communication network(s) 40 of the communication carrier(s) included in the selected parameter does not satisfy the predetermined quality requirement during the current communication carrier selection operation, the previous connection destination communication carrier is chosen as the connection destination communication carrier in the current communication carrier selection operation. The communication network 40 of the previous connection destination communication carrier was used for communication between the wireless communicator 20 and the center device 30 until the current communication carrier selection operation, and continues to be used after the current communication carrier selection operation. This can prevent a situation in which the information transmission operation cannot be carried out after the current communication carrier selection operation.

### <First Variant>

In the embodiment described above, in step S1 of FIG. 4, the controller 21 determines that a predetermined requirement has been satisfied once an activation operation is performed via the reed switch of the input device 25. However, the predetermined requirement is not limited to this activation operation. For example, the controller 21 may measure an elapsed time from the completion of the previous communication carrier selection operation, and determine that a predetermined requirement has been satisfied once the elapsed time reaches a predetermined first interval (step S1: YES). In this case, the communication carrier selection operation is executed regularly.

In this case, where the controller 21 executes the communication carrier selection operation at intervals, the selection operation of selecting a parameter is carried out in line with changes in the communication information such as the usage fees of the communication networks 40, or the determination operation concerning the communication quality information is carried out in line with changes in the communication quality of the communication networks 40. Accordingly, the operation of transmitting information to the center device 30 can be executed under favorable communication conditions in accordance with changes in the communication information and the communication quality of the communication networks 40.

When the controller 21 executes the communication carrier selection operation at intervals, the controller 21 may regularly execute a setting operation of setting an execution interval between the completion of one communication carrier selection operation and the start of the next communication carrier selection operation. In this setting operation, the controller 21 may set the execution interval, for example, based on the communication information such as the usage fees of the communication networks 40.

An example will be described in which the preference ranks of the communication carriers providing the communication networks 40 are defined based on the usage fees of the communication networks 40 and in which the usage fee of the communication network 40 of the communication carrier chosen in the choice operation is higher than that of the communication network 40 of another communication carrier included in the candidate set of communication carriers. In this case, in the setting operation, the controller 21 may shorten the intervals at which it executes the communication carrier selection operation to less than the predetermined first interval.

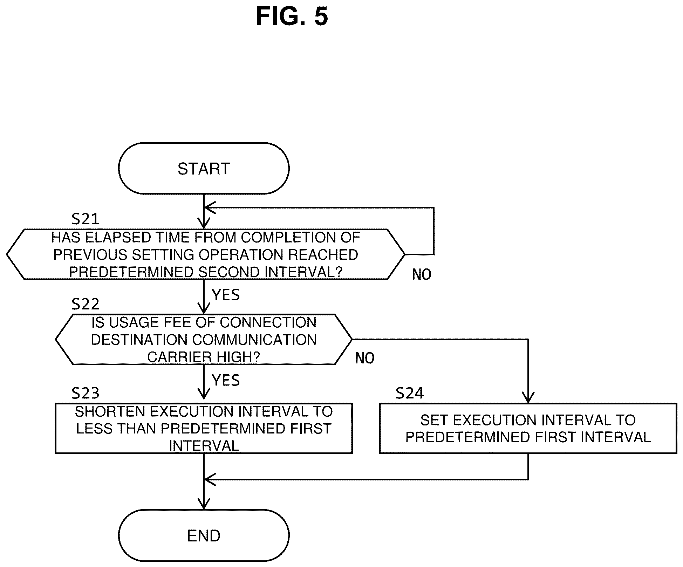

Specifically, the communication carrier selection operation is executed once a predetermined requirement is satisfied in step S1 of FIG. 4, and ends once the connection destination communication carrier is chosen in the choice operation of step S5, S7, S10, S12, S15, or S16. The controller 21 sets the execution interval between the completion of this communication carrier selection operation and the start of the next communication carrier selection operation in accordance with the flowchart of FIG. 5 which illustrates an example of the setting operation.

The setting operation of setting the execution interval for the communication carrier selection operation is executed regularly at predetermined second intervals. To this end, after executing the setting operation of setting the execution interval for the communication carrier selection operation, the controller 21 starts to measure an elapsed time from the completion of the setting operation. The controller 21 determines whether the elapsed time has reached the predetermined second interval (step S21). The controller 21 continues to measure the elapsed time until the elapsed time reaches the predetermined second interval (step S21: NO). Once the elapsed time reaches the predetermined second interval (step S21: YES), the controller 21 executes the setting operation of setting the execution interval for the communication carrier selection operation.

In the setting operation, the controller 21 compares the usage fee of the communication network 40 of the communication carrier chosen as the connection destination communication carrier with the usage fees of the communication networks 40 of the other communication carriers included in the candidate set of communication carriers that provide contractually connectable communication carriers 40 (step S22). If this comparison reveals that the candidate set includes a communication carrier with a lower usage fee than the connection destination carrier (step S22: YES), the controller 21 shortens the execution interval for the communication carrier selection operation to less than the predetermined first interval (step S23). Conversely, if the candidate set does not include any communication carrier with a lower usage fee than the connection destination carrier (step S22: NO), the controller 21 sets the execution interval for the communication carrier selection operation to the predetermined first interval (step S24).

In step S1 of FIG. 4, the controller 21 measures the elapsed time from the completion of the previous communication carrier selection operation, and determines whether the elapsed time has reached the predetermined first interval or the execution interval set shorter than the predetermined first interval. Once the elapsed time reaches the interval, the controller 21 determines that the predetermined requirement has been satisfied (step S1: YES), and proceeds to the subsequent steps.

Since the controller 21 executes the setting operation regularly as described above, the controller 21 can repeatedly perform the communication carrier selection operation at intervals set in accordance with changes in the communication information such as the usage fees of the communication networks 40. For example, when the usage fee of the communication network 40 currently used for the information transmission operation is higher than the usage fee of another communication network 40, the controller 21 shortens the execution interval. Accordingly, the communication network 40 to be used can be switched early from the current communication network 40 to the other communication network 40 with a lower usage fee, allowing the operation of transmitting information to the center device 30 to be executed under favorable communication conditions.

### <Second Variant>

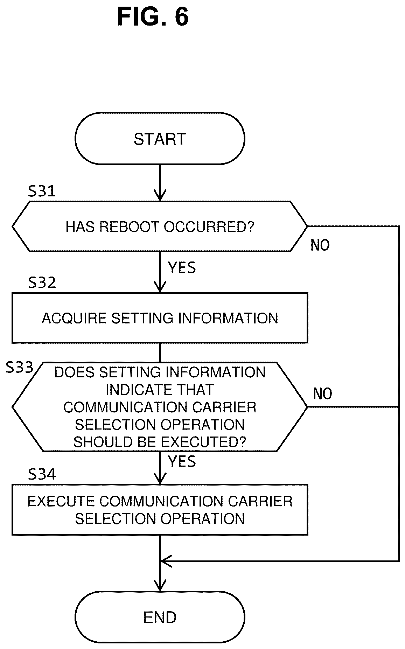

In the embodiment and the first variant described above, the controller 21 may hold setting information indicating whether to execute the communication carrier selection operation upon reboot of the wireless communicator 20. In this case, the controller 21 determines whether to execute the communication carrier selection operation in accordance with the flowchart of FIG. 6 which illustrates an example of an execution determination operation of determining whether to execute the communication carrier selection operation.

Specifically, the controller 21 determines whether the wireless communicator 20 has been rebooted (step S31). Upon determining that the wireless communicator 20 has been rebooted (step S31: YES), the controller 21 acquires, from the storage unit 29, the setting information indicating whether to execute the communication carrier selection operation (step S32). For example, the setting information indicating whether to execute the communication carrier selection operation may be input by the user using the input device 25 and stored in the storage unit 29. Alternatively, the setting information may be input by the user through wireless communication of the setter 12 or the center device 30 with the wireless communicator 20 and stored in the storage unit 29 via the first communication interface 23.

The controller 21 determines whether the setting information indicates that the communication carrier selection operation should be executed (step S33). When the setting information indicates that the communication carrier selection operation should be executed (step S33: YES), the controller 21 executes the communication carrier selection operation illustrated in FIG. 4 (step S34). In this case, the controller 21 determines in step S1 of FIG. 4 that the predetermined requirement has been satisfied (step S1: YES), and proceeds to step S2 and the subsequent steps. In this manner, the connection destination communication carrier is chosen in accordance with the communication conditions at the time of reboot, allowing the operation of transmitting information to the center device 30 to be executed using the connection destination communication carrier under favorable communication conditions.

In step S33, upon determining that the setting information does not indicate that the communication carrier selection operation should be executed (step S33: NO), the controller 21 does not execute the communication carrier selection operation. The controller 21 refers to the storage unit 29 to identify the communication network 40 to which the wireless communicator was connected immediately before the reboot, and executes the information transmission operation via that communication network 40. Thus, for example, when the wireless communicator 20 is rebooted irrespective of the communication conditions of the communication networks 40, the communication carrier selection operation is skipped, and the communication network 40 to which the wireless communicator was connected immediately before the reboot continues to be used. This enables prompt execution of the operation of transmitting information to the center device 30.

### <Third Variant>

In the embodiment and the first and second variants described above, in case that the wireless communicator 20 is unable to transmit the information related to the meter 11 to the center device 30 because the communication network 40 of the connection destination communication carrier is out of range, the wireless communicator 20 may select a communication carrier other than the connection destination communication carrier from the candidate set of communication carriers and use the the communication network 40 of the other communication carrier to transmit the information related to the meter 11 to the center device 30.

A specific example occurs when the communication quality of the communication network 40 of the connection destination communication carrier, which has been chosen by the controller 21 in the communication carrier selection operation of FIG. 4, deteriorates, so that, for instance, the level of at least one of RSRP, SINR, and RSRQ shown in FIG. 3 drops to Level 0 and the communication network 40 falls out of range. In this case, even if the controller 21 transmits information to the center device 30, the center device 30 might fail to receive the information, or even if the center device 30 having received the information transmits a confirmation of receipt to the wireless communicator 20, the wireless communicator 20 might fail to receive the confirmation. Under such circumstances, the controller 21 cannot terminate the session triggered by information transmission unless it receives a confirmation of receipt, and repeats information transmission to the center device 30 regularly. Once the number of information transmissions reaches a predetermined limit, the controller 21 determines that retries have been exhausted, and stops the repeated information transmissions.

The controller 21 then selects a communication carrier other than the connection destination communication carrier from the candidate set of communication carriers. For example, when the first communication carrier is being used as the connection destination communication carrier for the information transmission operation and the communication network 40 of the first communication carrier falls out of range, the controller 21 selects a communication carrier other than the first communication carrier from the candidate set consisting of the first to third communication carriers based on their preference ranks or on which communication carrier was the previous connection destination communication carrier, and chooses the other communication carrier, namely the second or third communication carrier, as the new connection destination communication carrier. When the communication network 40 of the second or third communication carrier falls out of range, as in the case where the communication network 40 of the first communication carrier falls out of range, a communication carrier other than the second or third communication carrier is chosen as the new connection destination communication carrier.

That is, the controller 21 may choose either the second communication carrier or the third communication carrier as the connection destination communication carrier based on their preference ranks. In the example of FIG. 2, since the preference rank of the second communication carrier is higher than that of the third communication carrier, the controller 21 may choose the second communication carrier as the new connection destination communication carrier.

A case may be envisaged in which the second communication carrier or the third communication carrier was the previous connection destination communication carrier to which the wireless communicator was connected immediately before connection to the first communication carrier used as the current connection destination communication carrier. In this case, the controller 21 may choose the previous connection destination communication carrier as the new connection destination communication carrier.

As described above, the controller 21 selects a communication carrier other than the current connection destination communication carrier from the candidate set of communication carriers, chooses the other communication carrier as the new connection destination communication carrier, and executes the operation of transmitting information to the center device 30 via the connection destination communication carrier. Accordingly, in case that the communication quality of the communication carrier chosen as the connection destination communication carrier in the carrier selection operation deteriorates to the extent that the communication carrier falls out of range, the number of information retransmissions can be limited to minimize the increase in communication cost due to retransmissions. In addition, the wireless communicator 20 executes the carrier selection operation to choose a communication carrier other than the current connection destination communication carrier as the new connection destination communication carrier, and performs the information transmission operation using the newly chosen connection destination communication carrier. Thus, the wireless communicator 20 can avoid a situation in which it cannot carry out the information transmission operation.

From the foregoing description, numerous modifications and other embodiments of the present disclosure are obvious to those skilled in the art. Accordingly, the foregoing description is to be construed as illustrative only, and is provided for the purpose of teaching those skilled in the art the best mode for carrying out the present disclosure. The structural and/or functional details may be substantially modified without departing from the scope of the present disclosure.

### <Additional Statements>

The following technologies are disclosed based on the embodiments and the variants described above.

Technology 1 is a wireless communicator that transmits information to a center device using a communication network of a communication carrier, the information being related to a meter that measures consumption of electricity, gas, or water, the wireless communicator including: a controller; and a communication interface, wherein the controller executes a communication carrier selection operation including: an acquisition operation of acquiring communication quality information of a communication network of a communication carrier included in a candidate set of communication carriers that provide communication networks to which the wireless communicator is connectable via the communication interface, wherein the communication carrier subjected to the acquisition operation is selected in accordance with preference ranks assigned to the communication carriers; a determination operation of determining whether the communication quality information satisfies a predetermined quality requirement; and a choice operation of choosing a connection destination communication carrier the communication network of which is used for transmission of the information related to the meter, wherein a communication carrier that provides a communication network the communication quality information of which satisfies the predetermined quality requirement is chosen as the connection destination communication carrier, and upon choosing the connection destination communication carrier in the choice operation, the controller terminates the communication carrier selection operation without executing the acquisition operation for any other communication carrier having a lower preference rank than the chosen connection destination communication carrier.

In this configuration, the connection destination communication carrier is chosen based on the preference ranks and the communication quality information. Accordingly, a communication carrier that provides a communication network the communication quality information of which satisfies the predetermined quality requirement and that has a higher preference rank than the other candidate communication carriers is chosen as the connection destination communication carrier. By using such a connection destination communication carrier, the information related to the meter can be transmitted to the center device under favorable communication conditions.

Furthermore, the communication quality information of the communication networks is acquired in descending order of preference rank. Once a communication carrier that provides a communication network the communication quality information of which satisfies the predetermined quality requirement is chosen as the connection destination communication carrier, the communication quality information of the communication network of any other communication carrier having a lower preference rank than the chosen connection destination communication carrier is not acquired. Accordingly, the wireless communicator can promptly transmit the information related to the meter to the center device using the connection destination communication carrier chosen in the communication carrier selection operation.

Technology 2 is the wireless communicator according to technology 1, wherein upon determining in the determination operation that the communication quality information of the communication network of every communication carrier included in the candidate set does not satisfy the predetermined quality requirement, the controller executes the choice operation to choose, as the connection destination communication carrier, a communication carrier that provides a communication network that was connected to the wireless communicator before execution of the communication carrier selection operation.

In this configuration, when the communication quality information of the communication network of every communication carrier included in the candidate set does not satisfy the predetermined quality requirement, the previous connection destination communication carrier is chosen as the connection destination communication carrier in the communication carrier selection operation. Since the previous connection destination communication carrier was used for communication until the current communication carrier selection operation, the use of the communication network of this communication carrier allows the wireless communicator to avoid a situation in which it cannot carry out information transmission.

Technology 3 is the wireless communicator according to technology 1 or 2, wherein the controller executes the communication carrier selection operation at intervals. In this configuration, when the communication conditions such as the usage fees and communication quality of the communication networks of the communication carriers change during the interval between the previous execution of the communication carrier selection operation and the current execution of the communication carrier selection operation, the connection destination communication carrier is chosen in accordance with the changes in the communication conditions. By using such a connection destination communication carrier, the information related to the meter can be transmitted to the center device under favorable communication conditions.

Technology 4 is the wireless communicator according to technology 3, wherein the controller regularly executes a setting operation of setting the intervals at which the controller executes the communication carrier selection operation.

In this configuration, the execution interval between the completion of one communication carrier selection operation and the start of the next communication carrier selection operation is set regularly. When the communication conditions such as the usage fees of the communication networks change during the execution interval, the execution interval is adjusted in accordance with the changes in the communication conditions, and the communication carrier selection operation is executed at the newly set intervals. Through this communication carrier selection operation, the connection destination communication carrier is chosen in accordance with the changes, enabling transmission of the information related to the meter to the center device under favorable communication conditions.

Technology 5 is the wireless communicator according to any one of technologies 1 to 4, wherein the controller holds setting information indicating whether to execute the communication carrier selection operation upon reboot of the wireless communicator.

In this configuration, when, for example, the wireless communicator is rebooted in response to changes such as deterioration of the communication conditions, the connection destination communication carrier can be chosen in accordance with the changed communication conditions by executing the communication carrier selection operation upon the reboot. The use of the communication network of the connection destination communication carrier chosen in this manner allows the information related to the meter to be transmitted to the center device under favorable communication conditions. When, for example, the wireless communicator is rebooted irrespective of changes in the communication conditions, the communication carrier to which the wireless communication was connected before the reboot may continue to be used without executing the communication carrier selection operation upon the reboot. This enables prompt transmission of the information related to the meter to the center device. Such determination of whether to execute the communication carrier selection operation upon reboot can be made based on the setting information in line with the user's intention.

Technology 6 is the wireless communicator according to any one of technologies 1 to 5, wherein in case that the controller is unable to transmit the information related to the meter to the center device because the communication network of the connection destination communication carrier is out of range, the controller selects a communication carrier other than the connection destination communication carrier from the candidate set of communication carriers and uses the communication network of the other communication carrier to transmit the information related to the meter to the center device. In this configuration, even if the communication network of the connection destination communication carrier falls out of range, the wireless communicator can reliably transmit the information related to the meter to the center device by using another communication network.

Technology 7 is the wireless communicator according to any one of technologies 1 to 6, wherein the communication quality information includes a measured value of at least one of reference signal received power (RSRP), reference signal received quality (RSRQ), or signal-to-interference-plus-noise ratio (SINR). In this configuration, the connection destination communication carrier is chosen based on the communication quality information such as RSRP, SINR, or RSRQ. Accordingly, a connection destination communication carrier that offers favorable communication conditions can be used for transmitting the information related to the meter to the center device.

Technology 8 is the wireless communicator according to any one of technologies 1 to 7, wherein the controller executes a selection operation of selecting a parameter to be used in the acquisition operation from a candidate set of parameters each of which is associated with one or more of the communication carriers that provide the communication networks to which the wireless communicator is connectable and with the preference ranks of the one or more communication carriers.

In this configuration, the user selects a desired parameter from the candidate set of parameters, and the communication carrier selection operation is executed based on the communication carriers and their preference ranks included in the selected parameter. This enables the wireless communicator to use the communication network of a communication carrier that aligns with the user's intention for information transmission.

Technology 9 is the wireless communicator according to technology 8, wherein the controller receives an instruction to select the parameter in the selection operation via the communication interface. In this configuration, for example, by wirelessly communicating with the communication interface of the wireless communicator using a setter such as a mobile wireless terminal or the center device, the user can easily select a parameter and input it to the controller via the communication interface.

Technology 10 is the wireless communicator according to technology 8, including an input device that inputs an instruction to select the parameter in the selection operation to the controller. In this configuration, the user can easily select a parameter and input it to the controller by operating the input device.

Technology 11 is a method of operating a wireless communicator that transmits information to a center device using a communication network of a communication carrier, the information being related to a meter that measures consumption of electricity, gas, or water, the method including: causing the wireless communicator to execute a communication carrier selection operation including an acquisition operation of acquiring communication quality information of a communication network of a communication carrier included in a candidate set of communication carriers that provide communication networks to which the wireless communicator is connectable via the communication interface, wherein the communication carrier subjected to the acquisition operation is selected in accordance with preference ranks assigned to the communication carriers, a determination operation of determining whether the communication quality information satisfies a predetermined quality requirement, and a choice operation of choosing a connection destination communication carrier the communication network of which is used for transmission of the information related to the meter, wherein a communication carrier that provides a communication network the communication quality information of which satisfies the predetermined quality requirement is chosen as the connection destination communication carrier; and upon choosing the connection destination communication carrier in the choice operation, causing the wireless communicator to terminate the communication carrier selection operation without executing the acquisition operation for any other communication carrier having a lower preference rank than the chosen connection destination communication carrier.

In this method, a communication carrier that provides a communication network the communication quality information of which satisfies the predetermined quality requirement and that has a higher preference rank than the other candidate communication carriers is chosen as the connection destination communication carrier. Accordingly, the information related to the meter can be transmitted to the center device under favorable communication conditions. Furthermore, the communication quality information of the communication networks of the communication carriers is acquired in descending order of preference rank. When the communication quality information of a communication network satisfies the predetermined quality requirement, the communication carrier that provides the communication network is chosen as the connection destination communication carrier. Since the communication quality information of the communication network of any other communication carrier having a lower preference rank is not acquired, the information related to the meter can be promptly transmitted to the center device using the chosen connection destination communication carrier.

### Reference Signs List

11: meter
20: wireless communicator
23: first communication interface (communication interface)
25: input device
30: center device
40: communication network
40a: first communication network (communication network)
40b: second communication network (communication network)
40c: third communication network (communication network)

## Claims

1. A wireless communicator that transmits information to a center device using a communication network of a communication carrier, the information being related to a meter that measures consumption of electricity, gas, or water, the wireless communicator comprising:
a controller; and
a communication interface, wherein
the controller executes a communication carrier selection operation including:
an acquisition operation of acquiring communication quality information of a communication network of a communication carrier included in a candidate set of communication carriers that provide communication networks to which the wireless communicator is connectable via the communication interface, wherein the communication carrier subjected to the acquisition operation is selected in accordance with preference ranks assigned to the communication carriers;
a determination operation of determining whether the communication quality information satisfies a predetermined quality requirement; and
a choice operation of choosing a connection destination communication carrier the communication network of which is used for transmission of the information related to the meter, wherein a communication carrier that provides a communication network the communication quality information of which satisfies the predetermined quality requirement is chosen as the connection destination communication carrier, and
upon choosing the connection destination communication carrier in the choice operation, the controller terminates the communication carrier selection operation without executing the acquisition operation for any other communication carrier having a lower preference rank than the chosen connection destination communication carrier.

2. The wireless communicator according to claim 1, wherein
upon determining in the determination operation that the communication quality information of the communication network of every communication carrier included in the candidate set does not satisfy the predetermined quality requirement, the controller executes the choice operation to choose, as the connection destination communication carrier, a communication carrier that provides a communication network that was connected to the wireless communicator before execution of the communication carrier selection operation.

3. The wireless communicator according to claim 1, wherein
the controller executes the communication carrier selection operation at intervals.

4. The wireless communicator according to claim 3, wherein
the controller regularly executes a setting operation of setting the intervals at which the controller executes the communication carrier selection operation.

5. The wireless communicator according to claim 1, wherein
the controller holds setting information indicating whether to execute the communication carrier selection operation upon reboot of the wireless communicator.

6. The wireless communicator according to claim 1, wherein
in case that the controller is unable to transmit the information related to the meter to the center device because the communication network of the connection destination communication carrier is out of range, the controller selects a communication carrier other than the connection destination communication carrier from the candidate set of communication carriers and uses the communication network of the other communication carrier to transmit the information related to the meter to the center device.

7. The wireless communicator according to any one of claims 1 to 6, wherein the communication quality information includes a measured value of at least one of reference signal received power (RSRP), reference signal received quality (RSRQ), or
signal-to-interference-plus-noise ratio (SINR).

8. The wireless communicator according to any one of claims 1 to 6, wherein
the controller executes a selection operation of selecting a parameter to be used in the acquisition operation from a candidate set of parameters each of which is associated with one or more of the communication carriers that provide the communication networks to which the wireless communicator is connectable and with the preference ranks of the one or more communication carriers.

9. The wireless communicator according to claim 8, wherein
the controller receives an instruction to select the parameter in the selection operation via the communication interface.

10. The wireless communicator according to claim 8, comprising an input device that inputs an instruction to select the parameter in the selection operation to the controller.

11. A method of operating a wireless communicator that transmits information to a center device using a communication network of a communication carrier, the information being related to a meter that measures consumption of electricity, gas, or water, the method comprising:
causing the wireless communicator to execute a communication carrier selection operation including
an acquisition operation of acquiring communication quality information of a communication network of a communication carrier included in a candidate set of communication carriers that provide communication networks to which the wireless communicator is connectable via the communication interface, wherein the communication carrier subjected to the acquisition operation is selected in accordance with preference ranks assigned to the communication carriers,
a determination operation of determining whether the communication quality information satisfies a predetermined quality requirement, and
a choice operation of choosing a connection destination communication carrier the communication network of which is used for transmission of the information related to the meter, wherein a communication carrier that provides a communication network the communication quality information of which satisfies the predetermined quality requirement is chosen as the connection destination communication carrier; and
upon choosing the connection destination communication carrier in the choice operation, causing the wireless communicator to terminate the communication carrier selection operation without executing the acquisition operation for any other communication carrier having a lower preference rank than the chosen connection destination communication carrier.
